# EUROPÄISCHE PATENTSCHRIFT

(11) **EP 0 795 919 B1**
(45) Veröffentlichungstag und Bekanntmachung des Hinweises auf die Patenterteilung: **09.01.2002**
(21) Anmeldenummer: 97104226.2
(22) Anmeldetag: 13.03.1997
(51) Int. Cl.: H01M 10/54, B07C 5/346

(54) **Verfahren zum Sortieren von Elektronikschrott, wie beispielsweise Altbatterien und/oder Altakkumulatoren, sowie Vorrichtung zur Durchführung des Verfahrens**
Method of sorting electronic waste material, especially from old batteries and/or old accumulators as well as a device for carrying it out
Procédé de tri des déchets électronique, notamment de batteries anciennes et/ou accumulateurs anciens et dispositif pour la mise en oeuvre du procédé

(30) Priorität: 15.03.1996 DE 19610093
(43) Veröffentlichungstag der Anmeldung: 17.09.1997
(73) Patentinhaber: BSBG Bremer Sonderabfallberatungsgesellschaft mbH, 28195 Bremen (DE)
(72) Erfinder: Rausch, Sven, Dr.-Ing. Dipl.-Chem., 28195 Bremen (DE); Molchin, Thure, Dipl.-Ing., 28719 Bremen (DE)
(74) Vertreter: von Ahsen, Erwin-Detlef, Dipl.-Ing.

(56) Entgegenhaltungen:
- EP-A- 0 096 092
- EP-A- 0 580 241
- EP-A- 0 585 701
- US-A- 4 848 590

## Beschreibung

Die vorliegende Erfindung betrifft ein Verfahren zum Sortieren von Elektronikschrott, wie beispielsweise Altbatterien und/oder Altakkumulatoren, für die Rohstoffrückgewinnung, wobei der Elektronikschrott nach seinem Typ sortiert wird. Weiterhin betrifft die Erfindung eine Vorrichtung zur Durchführung des Verfahrens.

Es werden heutzutage elektronische Bauteile, wie beispielsweise Kondensatoren, Relais sowie Altbatterien und/oder Altakkumulatoren eingesetzt. Insbesondere bei Batterien und wiederaufladbaren Akkumulatoren gibt es eine Vielzahl unterschiedlicher Typen, die nach Art der elektrochemisch aktiven Inhaltsstoffe (Batteriemasse) unterschieden werden, beispielsweise Nickel-Cadmium-Akkus, Lithium-, Zink-Kohle-, Alkali-Mangan-, Nickel-Hydrid und Zink-Luft-Zellen. Verbrauchte Altbatterien bzw. Altakkumulatoren werden z. B. in Kaufhäusern in speziell hierfür bereitgestellten Sammelbehältern gesammelt. Diese Sammelbehälter enthalten ein Gemisch der unterschiedlichen Typen von Altbatterien bzw. Altakkumulatoren. Dieses Gemisch stellt ein komplexes Vielstoffgemisch mit giftigen Inhaltsstoffen dar. Die Behandlungskosten für ein geeignetes Trennverfahren sind bisher so hoch, daß das Gemisch aus Altbatterien bzw. Altakkumulatoren in der Regel auf Sonderabfalldeponien entsorgt wird.

Andere Arten von Elektronikschrott, beispielsweise Kondensatoren, Relais oder Ähnliches, fallen bei der Entsorgung von diversen elektronischen Geräten an. Dieser Elektronikschrott enthält ebenfalls problematische Inhaltsstoffe, wie Schwermetalle.

Die Erfindung befaßt sich mit dem Thema der Sortierung des Elektronikschrotts, beispielsweise der Altbatterien bzw. Altakkumulatoren nach ihrem Typ, d. h. nach ihren elektrochemisch aktiven Inhaltsstoffen, um die Altbatterien bzw. Altakkumulatoren einer Rohstoffrückgewinnung zuführen zu können. Ziel ist es, zumindest den überwiegenden Teil der Batterie- bzw. Akkumulatortypen der Rohstoffrückgewinnung zuzuführen. Dabei ist es von entscheidender Bedeutung, von den für die Rohstoffrückgewinnung vorgesehenen Typen 100% sortenreine Fraktionen zu erhalten.

In der Literatur ist das sogenannte Titalyse-Verfahren bekannt geworden, nach dem das Batteriegemisch manuell vorsortiert, gesiebt und durch Wirbelstrommessung weiter aufgetrennt wird. Aufgrund einer Wirbelstrommessung ist es nicht immer möglich, 100% sortenreine Fraktionen der einzelnen Batterie- bzw. Akkumulatortypen zu erhalten.

Der Erfindung liegt somit das Problem zugrunde, ein einfaches und kostengünstiges Verfahren, durch das sich Gemische von Elektronikschrott, beispielsweise Altbatterien bzw. Altakkumulatoren, 100% sortenrein sortieren lassen, und eine entsprechende Vorrichtung zu schaffen.

Zur Lösung dieses Problems ist das erfindungsgemäße Verfahren dadurch gekennzeichnet, daß der Elektronikschrott aufgrund einer Röntgentransmissionsanalyse während einer Relativbewegung des Elektronikschrotts zu einer Röntgenstation nach seinem Typ sortiert wird, wobei der Elektronikschrott vorzugsweise einzeln der Röntgenstation zugeführt wird.

Die Vorrichtung weist zur Lösung dieses Problems die folgenden Komponenten auf:
a) eine Röntgenstation (12), die wenigstens eine Röntgenquelle (25, 29, 30) und wenigstens eine Erkennungseinheit (26, 31, 32, 27) aufweist,
b) mindestens einen Förderer (19) auf dem der Elektronikschrott einzeln der Röntgenstation (12) zuführbar und kontinuierlich durch die Röntgenstation (12) hindurch förderbar ist,
c) eine Sortierstation (13), durch die in Abhängigkeit von Signalen der Erkennungseinheit (26, 31, 32, 27) der Elektronikschrott nach seinem Typ sortierbar ist.

Der Erfindung liegt die Erkenntnis zugrunde, daß sich der Elektronikschrott, wie beispielsweise Altbatterien bzw. Altakkumulatoren, aufgrund einer Röntgentransmissions in 100% sortenreine Fraktionen sortieren läßt. Eine Restfraktion weniger untergeordneter oder z. B. aufgrund von Beschädigungen nicht identifizierbarer Altbatterien bzw. Altakkumulatoren muß aber einkalkuliert werden. Durch die Röntgentransmissionsanalyse lassen sich die Altbatterien bzw. Altakkumulatoren bei kontinuierlicher Förderung der Altbatterien bzw. Altakkumulatoren mit wirtschaftlich interessanter Sortiergeschwindigkeit sortieren. Hierdurch ist die Sortierung und nachfolgende Rohstoffrückgewinnung auch aus wirtschaftlicher Sicht interessant.

Nach einer ersten Ausführungsform werden die Altbatterien bzw. Altakkumulatoren mit einer Röntgenstrahlung durchleuchtet. Aus dem gewonnenen Bild wird ein Grauwertspektrum erstellt und mit Referenz-Grauwertspektren für die einzelnen Typen von Altbatterien bzw. Altakkumulatoren verglichen. Da jeder Typ von Altbatterien bzw. Altakkumulatoren ein für ihn typisches Grauwertspektrum aufweist, lassen sich die Altbatterien bzw. Altakkumulatoren in 100% sortenreine Fraktionen sortieren.

Das Grauwertspektrum kann im Prinzip jede beliebige Zahl von Graustufen umfassen. Um den Rechenaufwand in Grenzen zu halten, sollte das Grauwertspektrum aber nicht mit zu vielen Graustufen erstellt werden. Vorzugsweise wird daher ein Grauwertspektrum mit sechzehn Graustufen erstellt.

Nach einer zweiten, alternativen Ausführungsform wird die Gesamttransmission ermittelt und mit Vergleichswerten für die einzelnen Typen von Altbatterien bzw. Altakkumulatoren verglichen. Dieser Ausführungsform liegt die überraschende Erkenntnis zugrunde, daß sich die einzelnen Typen von Altbatterien bzw. Altakkumulatoren bereits aufgrund von Gesamttransmissionswerten eindeutig identifizieren lassen. Dabei reicht es schon aus, wenn die Transmission nur in einem oder mehreren begrenzten Bereichen des ausgestrahlten Spektrums gemessen wird. Vorzugsweise werden die Altbatterien bzw. Altakkumulatoren zweimal mit unterschiedlicher Strahlungsenergie durchleuchtet und jeweils die Gesamttransmission ermittelt. Hierdurch ergibt sich eine sehr sichere Sortierung.

Durch das Verfahren nach der zweiten Ausführungsform können die einzelnen Typen von Altbatterien bzw. Altakkumulatoren auf besonders einfache Weise eindeutig identifiziert und sortiert werden. Eine bei dem ersten Ausführungsbeispiel immer noch erforderliche, relativ aufwendige Detektor-Bildwandler-Bildsynchronisations-Bilddigitalisierungsstrecke entfällt, so daß sich auch die Sortiergeschwindigkeit weiter steigern läßt. Die Behandlungskosten sind entsprechend reduziert.

Da sich die einzelnen Typen von Altbatterien bzw. Altakkumulatoren ausschließlich aufgrund der Röntgenanalyse eindeutig identifizieren lassen, können Altbatterien bzw. Altakkumulatoren unterschiedlicher Größe und Form sortiert werden. Ein mechanisches Vorsortieren, z. B. Sieben, kann entfallen. Jeder Typ von Altbatterien bzw. Altakkumulatoren verfügt über ein für ihn und seine Größe und Form typisches Grauwertspektrum bzw. typische Gesamttransmissionswerte.

Weitere Merkmale der Erfindung beziehen sich auf die verwendeten Strahlungsenergien, die Ausgestaltung des Sortierverfahrens, Weiterverarbeitungsschritte für die sortierten Altbatterien bzw. Altakkumulatoren sowie die Ausgestaltung der Vorrichtung zur Durchführung des Sortierverfahrens und werden nachfolgend anhand der Zeichnung näher erläutert. Es zeigen:
- Fig. 1: eine schematische Darstellung einer ersten Ausführungsform einer erfindungsgemäßen Vorrichtung,
- Fig. 2: eine schematische Darstellung einer zweiten Ausführungsform der erfindungsgemäßen Vorrichtung,
- Fig. 3: einen typischen Ablauf des erfindungsgemäßen Verfahrens, und
- Fig. 4: ein mögliches Weiterbehandlungsverfahren für die sortierten Altbatterien bzw. Altakkumulatoren.

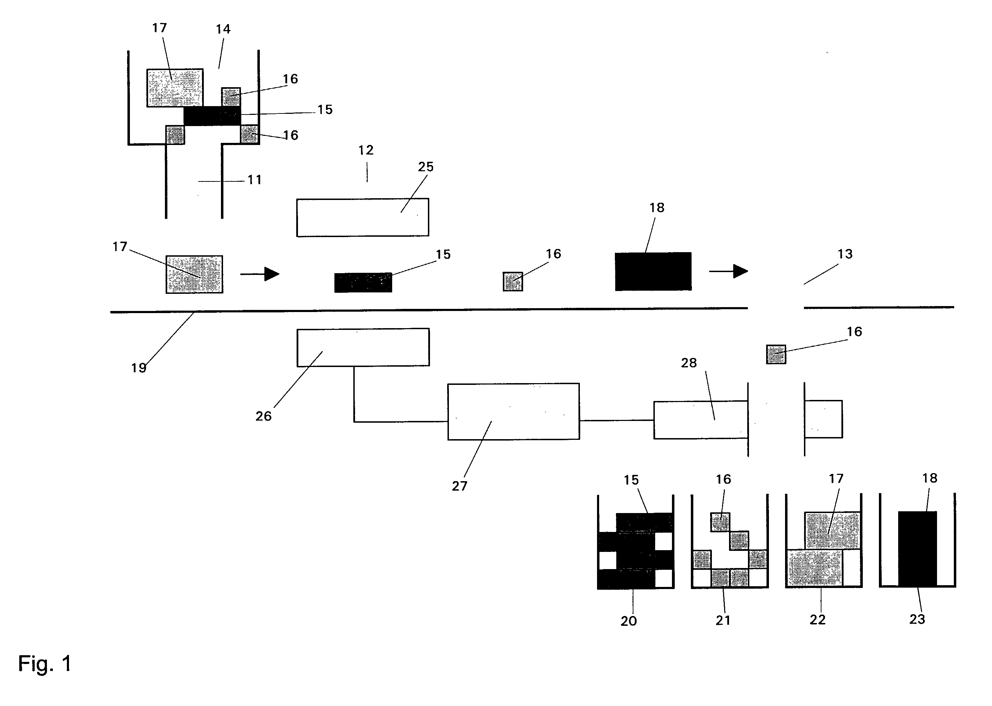

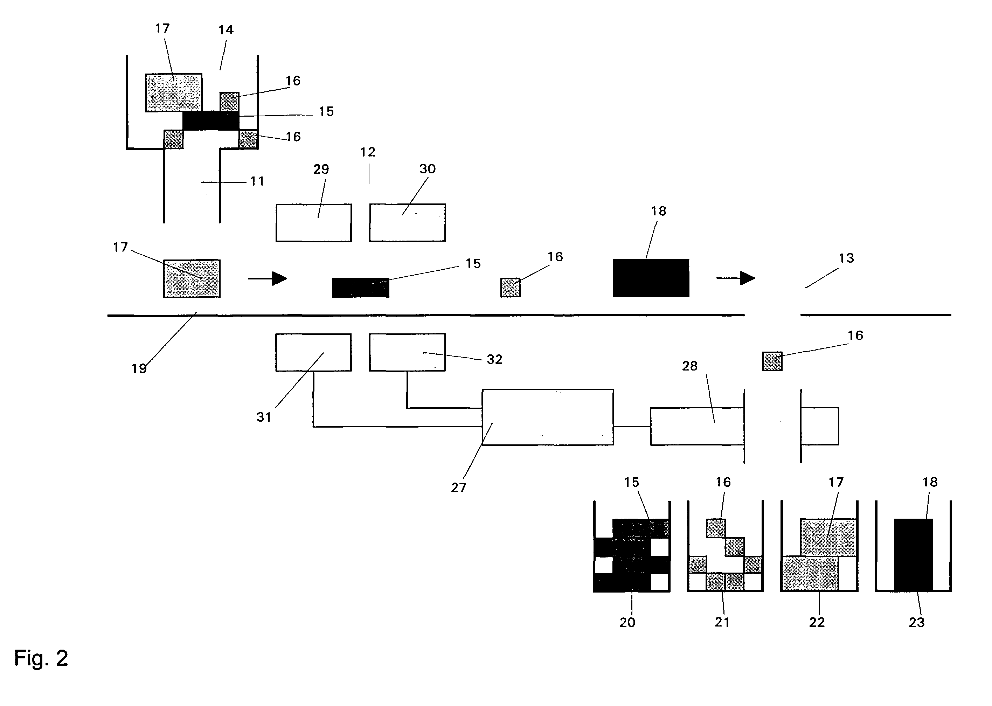

Die in den Fig. 1 und 2 schematisch dargestellten Vorrichtungen weisen im wesentlichen eine Vereinzelungsstation 11, eine Röntgenstation 12 und eine Sortierstation 13 auf. Der Vereinzelungsstation 11 wird ein Gemisch 14 unterschiedlicher Typen von Altbatterien bzw. Altakkumulatoren 15, 16, 17, 18 zugeführt und durch die Vereinzelungsstation 11 einzeln nacheinander auf einem Förderer 19 abgelegt. Es können dabei nicht nur Altbatterien bzw. Altakkumulatoren 15..18 unterschiedlichen Typs sondern auch unterschiedlicher Größe und Form auf dem Förderer 19 abgelegt werden. Da eine sortenreine Sortierung allein aufgrund der Röntgenanalyse möglich ist, kann auf eine Vorsortierung der Größe nach verzichtet werden. Dieses ist vor allem für kleinere Anlagen interessant. Insbesondere bei größeren Anlagen kann es aber auch zweckmäßig sein, die Altbatterien bzw. die Altakkumulatoren 15..18 durch z. B. Sieben der Größe nach vorzusortieren. Es können dann beispielsweise auf parallelen Linien jeweils Altbatterien bzw. Altakkumulatoren 15..18 gleicher Größe durchleuchtet und dem Typ nach sortiert werden.

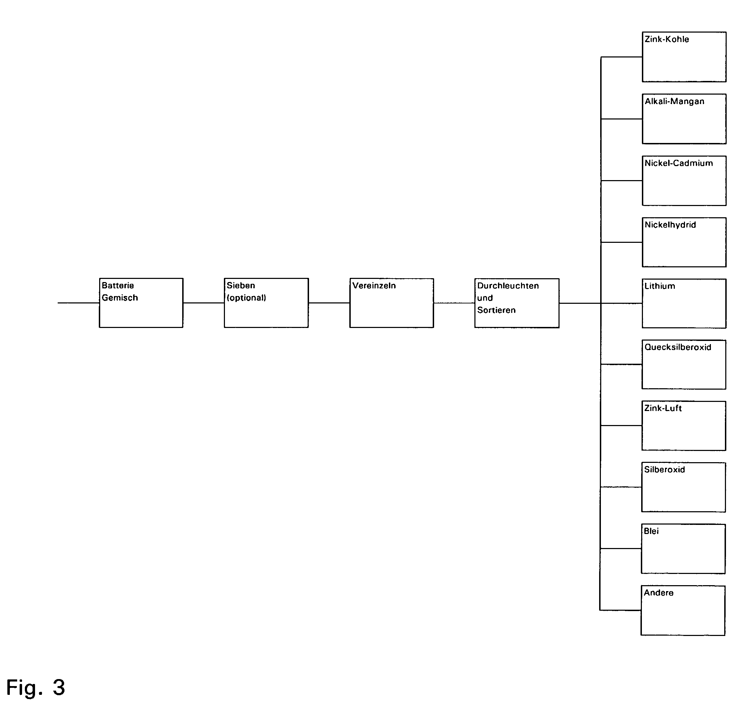

Durch den Förderer 19 werden die Altbatterien bzw. Altakkumulatoren 15..18 einzeln nacheinander der Röntgenstation 12 zugeführt, die die einzelnen Typen von Altbatterien bzw. Altakkumulatoren 15..18 identifiziert. In der Sortierstation 13 werden die Batterien schließlich entsprechend ihres Typs sortiert in Behälter 20, 21, 22, 23 abgelegt. Dieser Verfahrensablauf ist in Fig. 3 schematisch dargestellt.

Entscheidend bei dem erfindungsgemäßen Verfahren ist, daß die Behälter 20..23 jeweils 100% sortenrein einen bestimmten Typ der Altbatterien bzw. Altakkumulatoren 15..18 hinsichtlich der Batteriemasse enthalten. Diese können dem Recyclingprozeß zugeführt werden. In einen weiteren, nicht dargestellten Behälter kann eine mengenmäßig untergeordnete Restfraktion von beispielsweise aufgrund von Beschädigungen nicht identifizierter Altbatterien bzw. Altakkumulatoren 15..18 einsortiert werden, die manuell sortiert oder deponiert werden muß.

Bei dem Ausführungsbeispiel gemäß Fig. 1 weist die Röntgenstation 12 eine Röntgenquelle 25 und eine Detektor-Bildwandler-Einheit 26 auf. Durch die Detektor-Bildwandler-Einheit 26 werden fortlaufend Videobilder erzeugt und einem Prozeßrechner 27 zugeführt. Der Prozeßrechner wählt zunächst ein Videobild aus, das eine gesamte Altbatterie bzw. einen gesamten Altakkumulator zeigt (Bildsynchronisation). Diese Videobild wird durch den Prozeßrechner digitalisiert und einer Grauwertanalyse unterzogen. Dabei wird ein Grauwertspektrum erstellt. Dieses kann im Prinzip mit jeder beliebigen Zahl von Graustufen erstellt werden. Um den Rechenaufwand gering zu halten, sollte das Grauwertspektrum aber nicht mit zu vielen Graustufen erstellt werden. Ein typischer Wert ist sechzehn Graustufen. Dieses Grauwertspektrum wird dann mit Referenz-Grauwertspektren für die einzelnen Typen von Altbatterien bzw. Altakkumulatoren 15..18 verglichen und so der jeweilige Typ der Altbatterie bzw. des Altakkumulators 15..18 identifiziert. Der Prozeßrechner 27 steuert entsprechend dem Ergebnis der Identifikation einen Auswerfer 28, eine Weiche oder dergleichen in der Sortierstation 13. Hierdurch wird die Altbatterie bzw. der Altakkumulator 15..18 entsprechend des Typs in die Behälter 20..23 abgelegt.

Die Strahlungsenergie der Röntgenquelle 25 beträgt 40 bis 200 keV. Die besten Ergebnisse wurden bei 80 bis 200 keV erzielt. Als Röntgenquelle 25 kann jede beliebige, Röntgenstrahlen emittierende Quelle verwendet werden. Vorzugsweise wird eine Röntgenröhre verwendet. Es kommt aber auch ein radioaktiver Strahler in Betracht. Der Auswerfer 28, die Weiche oder dergleichen kann pneumatisch, magnetisch oder mechanisch betrieben sein.

Bei dem Ausführungsbeispiel gemäß Fig. 2 weist die Röntgenstation 12 zwei Röntgenquellen 29, 30 auf. Jeder Röntgenquelle 29, 30 ist ein Detektor 31, 32 zugeordnet. Die auf dem Förderer 19 ruhende Altbatterie bzw. der Altakkumulator 15..18 wird zunächst durch die erste Röntgenquelle 29 durchleuchtet und die Gesamttransmission mit Hilfe des ersten Detektors 31 ermittelt. Der erste Detektor 31 mißt hierzu die Intensität der Röntgenstrahlung ohne Batterie I₀ und mit Batterie I. Die Gesamttransmission ist der Quotient I/I₀ aus der Intensität der Röntgenstrahlung mit und ohne Batterie. Anschließend wird die Altbatterie bzw. der Altakkumulator 15..18 durch die zweite Röntgenquelle 30 durchleuchtet und wiederum die Gesamttransmission mit Hilfe des zweiten Detektors 32 ermittelt. Die Röntgenquellen 29, 30 weisen dabei unterschiedliche Strahlungsenergien auf, so daß auch die durch die Detektoren 31, 32 gemessenen Gesamttransmissionswerte unterschiedlich sind.

Die mit Hilfe der beiden Detektoren 31, 32 ermittelten Gesamttransmissionswerte werden an den Prozeßrechner 27 weitergeleitet und von diesem mit Vergleichswerten für jeden Typ von Altbatterien bzw. Altakkumulatoren 15..18 verglichen. Dabei lassen sich die einzelnen Typen von Altbatterien bzw. Altakkumulatoren 15..18 aufgrund der beiden Gesamttransmissionswerte eindeutig identifizieren.

Der Prozeßrechner steuert wiederum den Auswerfer 28, die Weiche oder dergleichen, so daß die jeweilige Altbatterie bzw. der Altakkumulator 15.. 18 in den entsprechenden Behälter 20..23 abgelegt wird.

Die Strahlungsenergie der Röntgenquellen 29, 30 beträgt ebenfalls 40 bis 200 keV. Auch hier wurden die besten Ergebnisse mit 80 bis 200 keV erzielt. Die konkreten Werte für die Röntgenquellen 29, 30 werden so gewählt, daß zufällige Überlappungen in den ermittelten Gesamttransmissionswerten vermieden werden. Dieses wird dadurch sichergestellt, daß die beiden Röntgenquellen 29, 30 eine Differenz der Strahlungsenergien von wenigstens 10 keV aufweisen. Je größer die Differenz der Strahlungsenergien ist, desto sicherer werden zufällige Überlappungen vermieden. Eine Differenz 10 bis 50 keV hat sich jedoch als ausreichend erwiesen.

Als Röntgenquelle 25 kann auch in Verbindung mit diesem Ausführungsbeispiel jede beliebige, Röntgenstrahlen emittierende Quelle, wie Röntgenröhre oder ein radioaktiver Strahler, verwendet werden.

Der Auswerfer 28, die Weiche oder dergleichen kann auch bei diesem Ausführungsbeispiel pneumatisch, magnetisch oder mechanisch angetrieben sein.

Nach einem weiteren, nicht zeichnerisch dargestelltem Ausführungsbeispiel wird mit nur einer Röntgenquelle 25 die Transmission in lediglich einem oder mehreren eingegrenzten Bereichen der Wellenlänge des ausgestrahlten Spektrums gemessen. Auch dieses Meßverfahren liefert sichere Sortierergebnisse.

Selbstverständlich können die oben beschriebenen Sortierverfahren auch gleichzeitig in mehreren Linien nebeneinander ausgeführt werden. Jede Linie kann dabei über eine eigene Röntgenstation 12 verfügen. Es ist aber ausreichend, wenn eine gemeinsame Röntgenstation 12 mit nur einer Röntgenquelle 25 bzw. einem Paar von Röntgenquellen 29, 30 für alle Linien vorgesehen ist. Ebenso kann jede Linie über einen eigenen Förderer 19 verfügen oder ein gemeinsamer Förderer 19 vorgesehen sein.

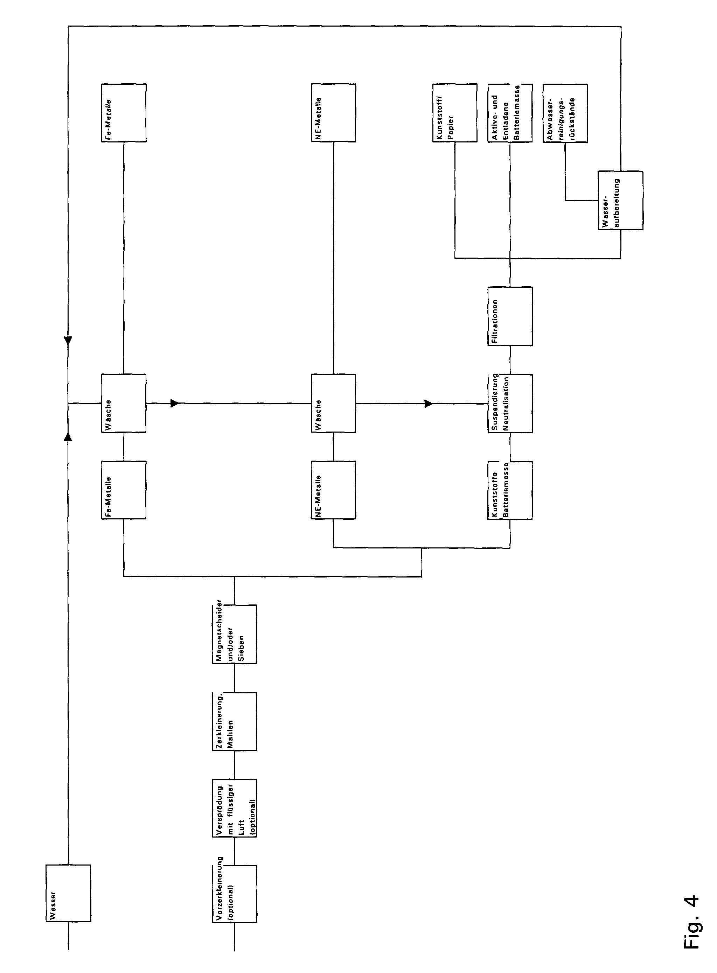

Da die Altbatterien bzw. Altakkumulatoren 15..18 sich durch die Verfahren nach den oben beschriebenen Ausführungsbeispielen der Erfindung 100% sortenrein sortieren lassen, ergeben sich sehr einfache neue Weiterverarbeitungsmöglichkeiten für die sortierten Altbatterien bzw. Altakkumulatoren 15..18. Ein möglicher Verfahrensablauf zur Weiterbehandlung ist in Fig. 4 näher gezeigt.

Die sortierten Altbatterien bzw. Altakkumulatoren 15..18 werden zunächst zerkleinert. Vor dem Zerkleinern werden die Altbatterien bzw. Altakkumulatoren 15..18 zweckmäßigerweise beispielsweise mit flüssiger Luft kaltversprödet. Die Altbatterien bzw. Altakkumulatoren 15..18 können auch zunächst vorzerkleinert, dann kaltversprödet und schließlich zerkleinert werden. Nach dem Zerkleinern werden die Hülsen der Altbatterien bzw. Altakkumulatoren 15..18 durch einen Magnetabscheider (Hülsen aus Eisen-Metallen) und/oder durch Sieben (Hülsen aus Nicht-Eisen-Metallen) herausgelesen und gewaschen. Die verbleibende Mischung aus Kunststoffen, Papier, Gummi, Elektrolyt und der Batteriemasse wird suspendiert und neutralisiert. Schließlich werden durch mehrstufige Filtration die Kunststoffe, Papier und Gummi abgetrennt und das Wasser aufbereitet. Die isolierte Fraktion der elektrochemisch aktiven Inhaltsstoffe kann entsprechend an Nickel-, Zink- oder Manganhütten zurückgegeben werden.

### Bezugszeichenliste:

- 11: Vereinzelungsstation
- 12: Röntgenstation
- 13: Sortierstation
- 14: Gemisch
- 15: Altbatterie bzw. Altakkumulator
- 16: Altbatterie bzw. Altakkumulator
- 17: Altbatterie bzw. Altakkumulator
- 18: Altbatterie bzw. Altakkumulator
- 19: Förderer
- 20: Behälter
- 21: Behälter
- 22: Behälter
- 23: Behälter

- 25: Röntgenquelle
- 26: Detektor-Bildwandler-Einheit
- 27: Prozeßrechner
- 28: Auswerfer
- 29: Röntgenquelle
- 30: Röntgenquelle
- 31: Detektor
- 32: Detektor

## Patentansprüche

1. Verfahren zum Sortieren von Elektronikschrott, wie beispielsweise Altbatterien und/oder Altakkumulatoren (15, 16, 17, 18), für die Rohstoffrückgewinnung, wobei der Elektronikschrott nach seinem Typ sortiert wird, **dadurch gekennzeichnet, daß** der Elektronikschrott aufgrund einer Röntgentransmissionsanalyse während einer Relativbewegung des Elektronikschrotts zu einer Röntgenstation (12) nach seinem Typ sortiert wird, wobei der Elektronikschrott vorzugsweise einzeln der Röntgenstation (12) zugeführt wird.

2. Verfahren nach Anspruch 1, **dadurch gekennzeichnet, daß** die Altbatterien und/oder Altakkumulatoren (15..18) mit einer Röntgenstrahlung durchleuchtet, aus dem digitalisierten Bild ein Grauwertspektrum, insbesondere mit wenigstens sechzehn Graustufen, ermittelt und dieses Grauwertspektrum mit Referenz-Grauwertspektren für die einzelnen Typen der Altbatterien- bzw. Altakkumulatoren (15..18) verglichen wird.

3. Verfahren nach Anspruch 1, **dadurch gekennzeichnet, daß** die Gesamttransmission wenigstens in einem oder mehreren eingegrenzten Bereichen der Wellenlänge des ausgestrahlten Spektrums ermittelt und mit Vergleichswerten für jeden Typ der Altbatterien und/oder Altakkumulatoren (15..18) verglichen wird.

4. Verfahren nach Anspruch 1 oder 3, **dadurch gekennzeichnet, daß** die Altbatterien und/oder Altakkumulatoren (15..18) wenigstens zwei mal mit Röntgenstrahlung unterschiedlicher Strahlungsenergie, insbesondere aus unterschiedlichen Röntgenquellen (29, 30), durchleuchtet werden, wobei jeweils die Gesamttransmission ermittelt und mit Vergleichswerten für jeden Typ der Altbatterien und/oder Altakkumulatoren (15..18) verglichen wird, wobei vorzugsweise zwei Röntgenquellen (29, 30) mit unterschiedlicher Strahlungsenergie verwendet werden.

5. Verfahren nach Anspruch 4, **dadurch gekennzeichnet, daß** die Strahlungsenergien der beiden Röntgenquellen (29, 30) eine Differenz von mindestens 10 keV, vorzugsweise 10 bis 50 keV, aufweisen.

6. Verfahren nach Anspruch 1 oder 5, **dadurch gekennzeichnet, daß** die Altbatterien und/oder Altakkumulatoren (15..18) mit einer Strahlungsenergie von 40 bis 200 keV, vorzugsweise 80 bis 200 keV, durchleuchtet werden.

7. Verfahren nach einem der Ansprüche 1 bis 6, **dadurch gekennzeichnet, daß** die nach ihrem Typ sortierten Altbatterien und/oder Altakkumulatoren (15..18) zerkleinert, anschließend Metallhülsen der Altbatterien und/oder Altakkumulatoren durch Magnetscheider abgetrennt, die verbleibende Masse in z. B. Wasser suspendiert und schließlich Kunststoff- und Papierreste ausgefiltert werden, wobei vorzugsweise die Altbatterien und/oder Altakkumulatoren (15..18) vor dem Zerkleinem kaltversprödet werden.

8. Vorrichtung zum Durchführen des Verfahrens nach einem der Ansprüche 1 bis 7, nämlich zum Sortieren von Elektronikschrott mittels einer Röntgentransmissionsanalyse mit:
a) einer Röntgenstation (12), die wenigstens eine Röntgenquelle (25, 29, 30) und wenigstens eine Erkennungseinheit (26, 31, 32, 27) aufweist,
b) einem Förderer (19) auf dem der Elektronikschrott einzeln der Röntgenstation (12) zuführbar und kontinuierlich durch die Röntgenstation (12) hindurch förderbar ist,
c) einer Sortierstation (13), durch die in Abhängigkeit von Signalen der Erkennungseinheit (26, 31, 32, 27) der Elektronikschrott nach seinem Typ sortierbar ist.

9. Vorrichtung nach Anspruch 8, **dadurch gekennzeichnet, daß** die Röntgenstation (12) eine Röntgenquelle und eine Einrichtung (27) zum Erstellen eines Grauwertspektrums bzw. zum Ermitteln der Gesamttransmission zumindest in einem oder in mehreren Bereichen der Wellenlänge des ausgestrahlten Spektrums aufweist.

10. Vorrichtung nach Anspruch 8, **dadurch gekennzeichnet, daß** die Röntgenstation (12) wenigstens zwei Röntgenquellen (29, 30) unterschiedlicher Strahlungsenergie sowie je einen Detektor (31, 32) für jede Röntgenquelle (29, 30) aufweist, wobei die Strahlungsenergien der Röntgenquellen (29, 30) vorzugsweise eine Differenz von wenigsten 10 keV, insbesondere 10 bis 50 keV, aufweisen.

## Claims

1. Process for sorting electronic scrap, for example used batteries and/or used storage batteries (15,16,17,18), in order to recover raw materials, whereby the electronic scrap is sorted according to type, **characterised in that** the electronic scrap is sorted according to type on the basis of an X-ray transmission analysis during a relative movement of the electronic scrap in relation to an X-ray station (12), whereby the electronic scrap is preferably fed individually to the X-ray station (12).

2. Process in accordance with claim 1, **characterised in that** the used batteries and/or used storage batteries (15..18) are scanned with X-rays, a grey scale spectrum, especially with at least sixteen grey levels, is determined from the digitised picture and this grey scale spectrum is compared with reference grey scale spectra for the individual types of used batteries and/or used storage batteries (15..18).

3. Process in accordance with claim 1, **characterised in that** the overall transmission determines the wavelength of the emitted spectrum within at least one or several limited ranges and is compared with comparison values for each type of used batteries and/or used storage batteries (15..18).

4. Process in accordance with claim 1 or 3, **characterised in that** the used batteries and/or used storage batteries (15..18) are scanned at least twice with X-rays of different radiated energy, especially from different X-ray sources (29, 30), whereby the overall transmission is determined in each case and compared with comparison values for each type of used batteries and/or used storage batteries (15..18), whereby two X-ray sources (29, 30) with different radiated energy are preferably used.

5. Process in accordance with claim 4, **characterised in that** the radiated energies of the two X-ray sources (29,30) display a difference of at least 10 keV, preferably 10 to 50 keV.

6. Process in accordance with claim 1 or 3, **characterised in that** the used batteries and/or used storage batteries (15..18) are scanned with a radiated energy of 40 to 200 keV, preferably 80 to 200 keV.

7. Process in accordance with one of claims 1 to 7, **characterised in that** the used batteries and/or used storage batteries (15..18) which are sorted according to type are disintegrated, that the metal casings of the used batteries and/or used storage batteries are then separated out by means of magnetic separators, that the remaining mass is suspended in water, for example, and that finally plastic and paper remnants are filtered out, whereby the used batteries and/or used storage batteries (15..18) are preferably cold-embrittled prior to fragmentation.

8. Apparatus for carrying out the process in accordance with one of claims 1 to 8, namely for sorting electronic scrap by means of X-ray transmission analysis, with:
a) an X-ray station (12), which features at least one X-ray source (25,29,30) and at least one detection unit (26,31,32,27),
b) a conveyor (19) on which the electronic scrap can be fed individually to the X-ray station (12) and continuously passed through the X-ray station (12),
c) a sorting station (13) by means of which the electronic scrap can be sorted according to type depending on the signals from the detection unit (26,31,32,27).

9. Apparatus in accordance with claim 8, **characterised in that** the X-ray station (12) features an X-ray source and a device (27) for creating a grey scale spectrum or determining the overall transmission, at least in one or more ranges of the wavelength of the emitted spectrum.

10. Apparatus in accordance with claim 8, **characterised in that** the X-ray station (12) features at least two X-ray sources (29,30) of differing radiated energy and a detector (31,32) for each X-ray source (29,30), whereby the radiated energies of the X-ray sources (29,30) preferably display a difference of at least 10 keV, especially 10 to 50 keV.

## Revendications

1. Procédé pour le tri de déchets électroniques, comme par exemple de vieilles batteries et/ou de vieux accumulateurs (15, 16, 17, 18), pour la récupération de matière première, dans lequel les déchets électroniques étant triés d'après, **caractérisé en ce que** les déchets électroniques étant dépistés en raison d'une analyse par rayons X transmise pendant un mouvement relatif des déchets électroniques, à une station radiographique (12) sont triés d'après leur type, **en ce que** de préférence, le déchet électronique est amené séparément à la station radiographique (12).

2. Procédé d'après la revendication I, **caractérisé en ce que** de vieilles batteries et/ou de vieux accumulateurs (15 à 18), pénétrés par une lumière (un rayon X), **en ce que** l'image numérisée est dépistée par un spectre gris de valeur, en particulier avec au moins seize étapes grises, et **en ce que** ce spectre gris de valeur est comparé avec les spectres gris de valeur de référence pour les types spécifiques de vieilles batteries ou de vieux accumulateurs (15 à 18).

3. Procédé d'après la revendication 1, **caractérisé en ce que** la transmission totale recherche tout au moins dans un ou plusieurs domaine limité de la longueur d'onde du spectre diffusé et est comparée avec les valeurs de comparaison pour chaque type de vieilles batteries et/ou de vieux accumulateurs (15 à 18).

4. Procédé d'après la revendication 1 ou 3, **caractérisé en ce que** les vieilles batteries et/ou vieux accumulateurs (15 à 18)sont pénétrés par un rayon X au moins deux fois par énergie de rayonnement différente de rayon X, et **en ce que** chaque fois la transmission totale est dépistée et comparée avec les valeurs de comparaison pour chaque type de vieilles batteries et/ou de vieux accumulateurs (15 à 18) et **en ce que** de préférence sont utilisées deux sources de radiographies (29, 30) avec énergie de rayonnement différente.

5. Procédé d'après la revendication 4, **caractérisé en ce que** les ressources énergétiques de rayonnement des deux sources de radiographies (29, 30) montrent une différence d'au moins 10 keV (kiloélectron volt), de préférence 10 à 50 keV.

6. Procédé d'après la revendication 1 ou 5, **caractérisé en ce que** les vieilles batteries et/ou vieux accumulateurs (15 à 18)sont radiographiées avec une énergie de rayonnement de 40 à 200 keV.

7. Procédé d'après la revendication 1 à 6, **caractérisé en ce que** de vieilles batteries triées d'après leur type et/ou de vieux accumulateurs (15. à 18) sont concassés, ensuite, les enveloppes de métal de vieilles batteries et/ou de vieux accumulateurs sont séparés par un séparateur magnétique, la masse restante est mise en suspension par exemple dans de l'eau et est filtrée, enfin, les restes de matériaux plastiques et de papier, et **en ce que** de préférence de vieilles batteries et/ou de vieux accumulateurs (15 à 18) sont rendus fragiles au froid par un courant d'air liquide avant d'être concassés.

8. Dispositif pour la réalisation du procédé d'après la revendication 1 à 7, à savoir au tri de déchets électroniques au moyen d'une analyse de transmission de rayonnement avec
a) station de radiographie (12), qui présente au moins une source de radiographie (25, 29, 30) et au moins une unité de reconnaissance (26, 31, 32, 27),
b) un transporteur (19) sur lequel les déchets électroniques sont amenés séparément à la station de radiographie (12),
c) Une station de tri (13), par laquelle en fonction des signaux de reconnaissance (26, 31, 32, 27) le déchet d'électronique est trié d'après son type.

9. Dispositif d'après la revendication 8, **caractérisé en ce que** le dispositif présente la station de radiographie (12), aux moins deux sources de rayon X (29, 30) d'énergie de rayonnement différente ainsi qu'un détecteur (31, 32) présent pour chaque source de rayon X (29, 30) et de préférence, les ressources énergétiques de rayonnement des sources de rayon X (29, 30) présentent notamment de préférence une différence d'au moins 10 keV, en particulier, 10 à 50 keV.

10. Dispositif d'après la revendication 8, **caractérisé en ce qu'**il présente la station de radiographie (12) au moins deux sources de rayon X (29, 30) d'énergie de rayonnement différente ainsi qu'un détecteur (31, 32) pour chaque source de rayon X (29, 30), et de préférence, les ressources énergétiques de rayonnement des sources de rayon X (29, 30) présentent notamment, de préférence une différence d'au moins 10 keV, en particulier; 10 à 50 keV.
